# EUROPÄISCHE PATENTSCHRIFT

(11) **EP 4 279 419 B1**
(45) Veröffentlichungstag und Bekanntmachung des Hinweises auf die Patenterteilung: **05.03.2025**
(21) Anmeldenummer: 23172610.0
(22) Anmeldetag: 10.05.2023
(51) Int. Cl.: B65G 1/04

(54) **VORRICHTUNG UND VERFAHREN ZUR FIXIERUNG VON LAUFSCHIENEN EINES HOCHREGALLAGERGESTELLS**
DEVICE AND METHOD FOR FIXING THE RAILS OF A HIGH-BAY STORAGE RACK
DISPOSITIF ET PROCÉDÉ DE FIXATION DE RAILS DE ROULEMENT D'UN RAYONNAGE À RAYONNAGES HAUTS

(30) Priorität: 18.05.2022 DE 102022112480
(43) Veröffentlichungstag der Anmeldung: 22.11.2023
(73) Patentinhaber: Buck, Martin, 27404 Zeven-Wistedt (DE)
(72) Erfinder: Buck, Martin, 27404 Zeven-Wistedt (DE)
(74) Vertreter: Glawe, Delfs, Moll

(56) Entgegenhaltungen:
- EP-A1- 1 260 458
- EP-A2- 1 650 141
- DE-A1- 102009 049 563
- DE-A1- 102014 114 978

## Beschreibung

Gegenstand der vorliegenden Erfindung ist eine Vorrichtung und ein Verfahren zur Befestigung zweier Laufschienen für einen Transportwagen an einer Mehrzahl von Befestigungslaschen, die von einer Stützstruktur nach oben abragen. Die Befestigungslaschen sind in vorgesehener Längsrichtung der Laufschienen voneinander beabstandet und derart angeordnet, dass eine Außenseite der ersten Laufschiene gleichzeitig an eine erste Gruppe der Mehrzahl von Befestigungslaschen anlegbar ist und eine Außenseite der zweiten Laufschiene gleichzeitig an eine zweite Gruppe der Mehrzahl von Befestigungslaschen anlegbar ist. Ein Abstand in Querrichtung zwischen einer Befestigungslasche der ersten Gruppe und einer Befestigungslasche der zweiten Gruppe ist dabei an eine vorgesehene Spurbreite der Laufschienen angepasst.

Derartige Laufschienen werden insbesondere innerhalb von Hochregallagern zum Lagern und Fördern von Paletten verwendet (siehe beispielsweise DE 200 08 073 U1, DE 299 05 013 U1, DE 20 2006 010 489 U1 oder DE 20 2017 004 863 U1). Solche Hochregallager weisen regelmäßig Lagerkanäle auf, in die beladene Paletten mit Hilfe des Transportwagens ein- und ausgelagert werden können. Innerhalb der Lagerkanäle sind üblicherweise in Längsrichtung voneinander beanstandete Traversen vorhanden, von denen die Befestigungslaschen nach oben abragen.

Zur Fixierung der Laufschienen werden diese auf die Traversen derart aufgelegt, dass eine Außenseite der Laufschienen an jeweiligen Befestigungslaschen anliegt. Zur nachfolgenden Herstellung der Verbindung war es im Stand der Technik grundsätzlich bekannt, manuelle Bohrungen durch die Befestigungslaschen und die daran anliegende Laufschiene vorzunehmen und die Befestigungslaschen mit den Laufschienen manuell zu verschrauben. Ein Nachteil dieser Lösung ist, dass sie aufgrund der manuellen Bohr- und Verschraubungsvorgänge sehr aufwändig und somit kostspielig ist.

Grundsätzlich bekannt war es alternativ, sowohl die Befestigungslaschen als auch die Laufschienen vorzulochen, so dass zumindest der Bohraufwand entfällt. Allerdings ist es bei dieser Vorgehensweise erforderlich, die Positionierung der Bohrungen sowie der Befestigungslaschen mit sehr geringen Toleranzen auszuführen, was ebenfalls mit einem hohem Aufwand einhergeht. Aus dem Dokument DE 103 34 846 A1 ist ein Schienenwechselzug zum Ausbauen von auf Schwellen verlegten Altschienen und Ersetzen derselben durch Neuschienen bekannt. Aus dem Dokument DE 21 2018 000 090 U1 ist darüber hinaus eine Schienenverlegmaschine für die städtische Schienenverkehrstechnik bekannt, die zwei Hebe- und Laufbetriebswagen, einen Verbindungstragbalken zum Verbinden der Hebe- und Laufwagen, einen Raupenlaufmechanismus und eine Tragstruktur aufweist.

Vor diesem Hintergrund ist es die Aufgabe der vorliegenden Erfindung, eine Vorrichtung sowie ein Verfahren zur Fixierung zweier Laufschienen für einen Transportwagen an einer Mehrzahl von Befestigungslaschen bereitzustellen, die bzw. das die oben genannten Nachteile zumindest teilweise vermeidet. Gelöst wird diese Aufgabe mit den Merkmalen der unabhängigen Ansprüche. Vorteilhafte Ausführungsformen sind in den abhängigen Ansprüchen angegeben. Erfindungsgemäß weist die Vorrichtung auf:
- zumindest eine Laufrolle zum Abrollen der Vorrichtung auf einer Lauffläche der in vorgesehener Längsrichtung vorausgerichteten Laufschienen,
- eine Positionierungseinheit mit zumindest einem ersten inneren Positionierungselement zur Anlage an einer Innenfläche der ersten Laufschiene und mit einem zweiten inneren Positionierungselement zur Anlage an einer Innenfläche der zweiten Laufschiene,
- eine Verbindungseinheit, die dazu ausgebildet ist, eine Verbindung zwischen den Befestigungslaschen und den jeweiligen Laufschienen herzustellen, wenn die Vorrichtung auf die beiden vorausgerichteten Laufschienen aufgesetzt ist.

Zunächst werden einige im Rahmen der vorliegenden Beschreibung verwendete Begriffe erläutert. Wenn eine Laufschiene vorausgerichtet ist bedeutet dies vorliegend, dass die Laufschiene auf die Stützstruktur aufgelegt und mit ihrer Außenseite an den Befestigungslaschen anliegt oder zumindest lediglich ein geringer Abstand zwischen der Außenseite und den Befestigungslaschen besteht.

Eine Querrichtung ist eine zur vorgesehenen Längsrichtung der Laufschienen senkrechte Richtung, die innerhalb einer Laufschienenebene verläuft und vorzugsweise horizontal ausgerichtet ist.

Der Begriff Befestigungslasche ist weit zu verstehen und umfasst sämtliche von der Stützstruktur nach oben abragenden Strukturen, die eine Ausrichtung und Fixierung einer Laufschiene an der Stützstruktur ermöglichen.

Die erfindungsgemäße Vorrichtung kann eine Antriebseinrichtung zur Bewegung der Vorrichtung entlang der in vorgesehener Längsrichtung vorausgerichteten Laufschienen aufweisen. Die Antriebseinrichtung kann beispielsweise ein von einem Benutzer bedienbares Handrad aufweisen, das zur Übertragung eines Drehmoments auf zumindest eine der Laufrollen ausgebildet ist. Möglich ist auch, dass die Antriebseinrichtung einen automatischen Antrieb der Vorrichtung, beispielsweise mit Hilfe eines Elektromotors, ermöglicht.

Mit Hilfe der erfindungsgemäßen Vorrichtung können die Laufschienen auf deutlich einfachere Weise mit den Befestigungslaschen verbunden werden. Es wurde erkannt, dass die noch nicht befestigten, sondern lediglich auf die Stützstruktur aufgelegten und entlang der Befestigungslaschen vorausgerichteten Laufschienen bereits dazu verwendet werden können, die erfindungsgemäße Vorrichtung aufzunehmen und eine Fortbewegung der Vorrichtung entlang der Laufschienen zu ermöglichen. Insbesondere kann die Vorrichtung auf einen am Anfang der Laufschienen befindlichen Längsabschnitt der bis dahin unbefestigten und lediglich vorausgerichteten Laufschienen auffahren, wobei die zumindest eine Laufrolle entlang der Laufschiene abrollt und dabei die Gewichtskraft der Vorrichtung auf die Laufschiene überträgt. Die Laufschiene wird dadurch auf die als Unterlage dienende Stützstruktur gedrückt und dadurch in Position gehalten.

Gleichzeitig ermöglichen die inneren Positionierungselemente, welche an jeweiligen Innenflächen der Laufschienen anliegen, eine exakte Ausrichtung der Laufschienen relativ zu den Befestigungslaschen, indem sie die Laufschienen entweder (sofern die Laufschienen in dem betreffenden Längsabschnitt noch nicht exakt ausgerichtet sind) nach außen gegen die Befestigungslaschen drücken oder (sofern sich die Laufschienen in dem betrachteten Abschnitt bereits in der vorgesehenen Position befinden und insbesondere bereits an den Befestigungslaschen anliegen) indem sie zumindest verhindern, dass die Laufschienen sich bei einem nachfolgenden Verbindungsvorgang aus ihrer vorgesehenen Position heraus nach innen bewegen. Insbesondere während des Vorgangs der Verbindung der Befestigungslasche mit den Laufschienen wird durch die inneren Positionierungselemente verhindert, dass die auf die Befestigungslasche und die Laufschiene einwirkende Verbindungseinheit die Laufschiene nach innen drückt.

In einer bevorzugten Ausführungsform umfasst die Vorrichtung zumindest zwei Laufrollen, die entlang der Querrichtung voneinander beabstandet sind, so dass jeweils eine Laufrolle auf einer der Laufschienen abrollen kann. Vorzugsweise sind zumindest zwei Paar Laufrollen vorgesehen. Die Gewichtskraft der Vorrichtung kann auf diese Weise gleichmäßig über einen größeren Längsabschnitt in beide Schienen eingeleitet werden, um bereits vor Herstellung der Verbindung zwischen Befestigungslasche und Laufschiene eine feste kraftschlüssige Verbindung zwischen Stützstruktur und Laufschienen sicherzustellen.

Die erfindungsgemäße Vorrichtung kann insbesondere eine Automatisierung des Verbindungsvorgangs ermöglichen. Dazu kann die Vorrichtung eine Sensoreinheit aufweisen, die ausgestaltet ist zur Erkennung, ob eine Längsposition der Verbindungseinheit mit einer Längsposition einer Befestigungslasche übereinstimmt. Die Sensoreinheit kann beispielsweise einen Kontaktsensor zur Erkennung eines mechanischen Kontakts zwischen dem Kontaktsensor und der Stützstruktur und/oder der Befestigungslasche aufweisen. Möglich ist auch, dass die Sensoreinheit einen optischen Sensor zur Erkennung einer Längsposition aufweist. Vorzugsweise sind die Antriebseinrichtung (sofern diese zum automatischen Antrieb der Vorrichtung ausgebildet ist) und/oder die Verbindungseinheit auf Basis eines Signals der Sensoreinheit steuerbar. Mit Hilfe der zum automaischen Antrieb der Vorrichtung eingerichteten Antriebseinrichtung kann die Vorrichtung in dieser Ausführungsform automatisiert auf Basis eines von der Sensoreinheit erhaltenen Signals in Längsrichtung bewegt werden, bis die Verbindungseinheit auf derselben Längsposition wie die Befestigungslasche ist. Anschließend kann die Verbindungseinheit angesteuert werden, um einen Verbindungsvorgang zwischen der Befestigungslasche und der Laufschiene auszuführen.

In einer Ausführungsform umfasst die Positionierungseinheit zumindest ein äußeres Positionierungselement zur Anlage an einer Außenfläche der Laufschiene. Das äußere Positionierungselement kann dazu ausgebildet sein die Laufschiene zu umgreifen. Insbesondere kann das äußere Positionierungselement in Querrichtung einem der inneren Positionierungselemente gegenüberliegen. Es können auch mehrere äußere Positionierungselemente vorgesehen sein, die jeweils einem der inneren Positionierungselemente gegenüberliegen. Vorzugsweise ist für jede der Laufschienen zumindest ein äußeres Positionierungselement vorhanden. Ein in Querrichtung gemessener lichter Abstand zwischen gegenüberliegenden inneren und äußeren Positionierungselementen kann insbesondere einer in Querrichtung gemessenen Dicke der Laufschiene entsprechen. Mit Hilfe der äußeren Positionierungselemente kann die Position der Laufschienen während der Bewegung der Vorrichtung sowie während der Durchführung eines Verbindungsvorgangs noch besser fixiert werden und die Ausrichtungsgenauigkeit dadurch erhöht werden. In einer vorteilhaften Ausführungsform liegen von der Verbindungseinheit herstellbare Befestigungspunkte innerhalb einer Ebene. Das äußere Positionierungselement liegt vorzugsweise oberhalb der Befestigungsebene an der Laufscheine an. Dadurch kann eine Kollision des äußeren Positionierungselements mit einer Befestigungslasche vermieden werden.

In einer Ausführungsform ist die Antriebseinrichtung zur Übertragung eines Drehmoments auf die Laufrolle ausgebildet. Die Vorrichtung kann einen elektrischen und/oder pneumatischen Energiespeicher aufweisen. Der Energiespeicher kann zum Betrieb der Antriebseinheit und/oder der Verbindungseinheit ausgebildet sein.

Vorzugsweise ist zumindest eine der äußeren und/oder inneren Positionierungselemente durch eine Führungsrolle gebildet. Die Führungsrolle kann zum Abrollen an einer Innenfläche bzw. Außenfläche der Laufschiene ausgebildet sein. Die Führungsrollen ermöglichen auf einfache Weise eine exakte Positionierung der Laufschienen und sind zudem verschleißarm.

Die Verbindungseinheit kann ein äußeres Verbindungswerkzeug aufweisen, das dazu ausgestaltet ist, während eines Verbindungsvorgangs von außen auf eine Befestigungslasche einzuwirken, um diese mit einer Laufschiene zu verbinden. Zudem kann vorgesehen sein, dass das äußere Verbindungswerkzeug dazu ausgestaltet ist, während des Verbindungsvorgangs von außen eine Kraft auf die Befestigungslasche auszuüben. Weiterhin kann die Verbindungsvorrichtung ein dem äußeren Verbindungswerkzeug in Querrichtung gegenüberliegendes inneres Verbindungswerkzeug aufweisen, das dazu ausgestaltet ist, auf einen Abschnitt der Laufschiene einen Gegendruck auszuüben und/oder diesen Abschnitt in Querrichtung nach außen zu drücken. Sofern die Laufschiene kurz vor Herstellung der Verbindung noch nicht absolut exakt ausrichtet war, kann mittels der Verbindungswerkzeuge eine noch genauere Positionierung erfolgen. Möglich ist es dabei auch, dass die Befestigungslasche während des Verbindungsvorgangs relativ zur Stützstruktur in eine finale Position bewegt wird (beispielsweise durch ein Verbiegen bzw. (plastisches und/oder elastisches) Verformen der Befestigungslasche). Das innere und/oder das äußere Verbindungswerkzeug kann hydraulisch und/oder pneumatisch angetrieben sein. Die Verbindungseinheit kann zudem eine Drucksteuerung zur Steuerung des inneren und/oder äußeren Verbindungswerkzeugs aufweisen. Die Drucksteuerung ist vorzugsweise dazu eingerichtet, einen einer Bewegung der Verbindungswerkzeuge entgegenwirkenden Gegendruck zu messen und einen Verbindungsvorgang auszulösen, sofern der Gegendruck einen Schwellwert überschreitet. Dem liegt der Gedanke zugrunde, dass der Gegendruck deutlich ansteigt, wenn Befestigungslasche und Laufschiene in der finalen Position gegeneinanderstoßen. Die Verbindungsgenauigkeit kann auf diese Weise deutlich erhöht werden. Die Verbindungseinheit ist vorzugsweise zur Herstellung einer Fügeverbindung zwischen der Befestigungslasche und der Laufschiene ausgebildet. Als Fügeverbindungen kommen beispielsweise Schweißverbindungen oder Nietverbindungen in Frage. Vorzugsweise ist die Fügeverbindung eine Durchsetzfügeverbindung (Clinchverbindung). Das äußere Verbindungswerkzeug kann einen Stempel und das innere Verbindungswerkzeug eine Matrize aufweisen, wobei die Matrize dazu ausgebildet ist, während des Verbindungsvorgangs von innen gegen eine Innenfläche der Laufschiene anzuliegen oder gegen die Innenfläche gepresst zu werden und wobei der Stempel dazu ausgebildet ist, von außen gegen die Befestigungslasche gepresst zu werden.

Gegenstand der Erfindung ist weiterhin eine Anordnung umfassend:
- ein Hochregallager mit einer Stützstruktur und zumindest einem Lagerkanal,
- zwei innerhalb des Lagerkanals zu befestigende Laufschienen und
- eine erfindungsgemäße Vorrichtung zur Befestigung zweier Laufschienen für einen Transportwagen an einer Mehrzahl von Befestigungslaschen.

Die Stützstruktur weist eine Mehrzahl von in Längsrichtung des Lagerkanals beabstandete Traversen auf, an denen die Mehrzahl von nach oben abragenden Befestigungslaschen so positioniert ist, dass eine Außenseite einer ersten der Laufschienen gleichzeitig an eine erste Gruppe der Mehrzahl von Befestigungslaschen anlegbar ist und eine Außenseite einer zweiten der Laufschienen gleichzeitig an eine zweite Gruppe der Mehrzahl von Befestigungslaschen anlegbar ist, wobei ein Abstand in Querrichtung zwischen einer Befestigungslasche der ersten Gruppe und einer Befestigungslasche der zweiten Gruppe an eine vorgesehene Spurbreite der Laufschienen angepasst ist. Eine in Querrichtung betrachtete Entfernung zwischen den äußeren Enden der ersten und zweiten inneren Positionierungselemente ist an die vorgesehene Spurbreite derart angepasst, dass die Außenflächen der Laufschienen bei einer Bewegung der Vorrichtung entlang der vorgesehenen Längsrichtung der Laufschienen gegen jeweilige Befestigungslaschen gedrückt oder die Laufschienen zumindest an einer in Querrichtung nach innen weisenden Bewegung gehindert werden.

Die erfindungsgemäße Anordnung kann durch weitere Merkmale, die oben bereits in Verbindung mit der erfindungsgemäßen Vorrichtung beschrieben wurden, fortgebildet werden. Die oben bereits in Verbindung mit der erfindungsgemäßen Vorrichtung beschriebenen Vorteile stellen sich ebenso bei der erfindungsgemäßen Anordnung ein.

In einer vorteilhaften Ausführungsform sind die Laufschienen durch C-Profile gebildet, deren offene Seiten bei vorgesehener Ausrichtung nach Innen weisen. Weiterhin ist die Lauffläche der Laufschiene vorzugsweise durch eine innere Bodenfläche des C-Profils gebildet. Die Verwendung der inneren Bodenfläche eines C-Profils als Lauffläche ermöglicht eine platzsparende Anordnung der Laufrollen im Inneren des C-Profils. Zudem kann gleichzeitig eine Außenwand des C-Profils zur Herstellung der Fügeverbindung verwendet werden.

In einer Ausführungsform umfasst das Hochregallager zumindest zwei Lagerkanäle und zumindest einen Transportgang, in den die Lagerkanäle einmünden. Die Anordnung kann weiterhin eine Transfereinrichtung aufweisen, die zur Aufnahme der erfindungsgemäßen Vorrichtung ausgebildet und entlang des Transportgangs derart bewegbar ist, dass die Vorrichtung ausgehend von einem ersten der Lagerkanäle auf die Transfereinrichtung auffahrbar und nach anschließender Bewegung der Transfereinrichtung in einen anderen der Lagerkanäle einfahrbar ist. Eine innerhalb eines Transportgangs bewegbare Transferreinrichtung ist grundsätzlich aus dem Stand der Technik für den Zweck bekannt, einen Hubwagen, der zum Anheben von Paletten (und ggf. darauf befindlichem Transportgut) ausgestaltet ist, von einem Lagerkanal zu einem anderen Lagerkanal zu bewegen und/oder die Palette an eine Entnahmeposition zu bewegen. Indem die Transfereinrichtung bevorzugt außerdem zur Bewegung der erfindungsgemäßen Vorrichtung verwendbar ist, kann die Vorrichtung nach der Fixierung eines Laufschienenpaars innerhalb eines ersten Lagerkanals zu einem anderen Lagerkanal gebracht werden, um dort ein weiteres Paar von Laufschienen zu befestigen. Weiterhin kann vorgesehen sein, dass die erfindungsgemäße Vorrichtung mit Hilfe der Transfereinrichtung in einen Aufzug einfahrbar ist, mit dem die Vorrichtung zu einer anderen Hochregallagerebene gebracht werden kann. Auf diese Weise kann sich die erfindungsgemäße Vorrichtung innerhalb des gesamten Hochregallagers bewegen, um in sämtlichen Lagerkanälen und sämtlichen Hochregalebenen des Hochregallagers entsprechende Laufschienen Paare zu fixieren.

Gegenstand der Erfindung ist weiterhin ein Verfahren zur Fixierung zweier Laufschienen für einen Transportwagen an einer Mehrzahl von Befestigungslaschen. Die Befestigungslaschen ragen von einer Stützstruktur nach oben ab, sind in vorgesehener Längsrichtung der Laufschienen voneinander beabstandet und derart angeordnet, dass eine Außenseite der ersten Laufschiene gleichzeitig an eine erste Gruppe der Mehrzahl von Befestigungslaschen anlegbar ist und eine Außenseite der zweiten Laufschiene gleichzeitig an eine zweite Gruppe der Mehrzahl von Befestigungslaschen anlegbar ist. Ein Abstand in Querrichtung zwischen einer Befestigungslasche der ersten Gruppe und einer Befestigungslasche der zweiten Gruppe ist an eine vorgesehene Spurbreite der Laufschienen angepasst. Das Verfahren umfasst die nachfolgenden Schritte:
a) Auflegen einer ersten der Laufschienen auf die Stützstruktur derart, dass eine Außenseite der Laufschiene entlang der ersten Gruppe der Befestigungslaschen vorausgerichtet ist;
b) Auflegen einer zweiten der Laufschienen auf die Stützstruktur derart, dass eine Außenseite der Laufschiene entlang der zweiten Gruppe der Befestigungslaschen vorausgerichtet ist;
c) Ausüben einer nach unten weisen Kraft auf einen Längsabschnitt der gemäß den Schritten a) und b) vorausgerichteten Laufschienen derart, dass der Längsabschnitt der jeweiligen Laufschiene auf die Stützstruktur gedrückt und kraftschlüssig fixiert wird;
d) Einbringen einer Positionierungseinheit mit einem ersten inneren Positionierungselement und einem zweiten inneren Positionierungselement in einen im Längsabschnitt befindlichen Zwischenraum zwischen den Laufschienen derart, dass das erste innere Positionierungselement an einer Innenfläche der ersten Laufschiene und das zweite innere Positionierungselement an einer Innenfläche der zweiten Laufschiene zum Liegen kommt, wobei die vorausgerichteten Laufschienen dabei nach außen gegen die jeweiligen Befestigungslaschen gedrückt oder die Laufschienen zumindest an einer in Querrichtung nach innen weisenden Bewegung gehindert werden;
e) Herstellen einer Verbindung zwischen einer im Längsabschnitt befindlichen Befestigungslasche und einer Außenseite einer der Laufschienen, wobei die Befestigungslaschen zur Herstellung der Verbindung von außen umgriffen werden.

Das erfindungsgemäße Verfahren kann durch weitere Merkmale fortgebildet werden, die in Zusammenhang mit der erfindungsgemäßen Vorrichtung oder in Zusammenhang mit der erfindungsgemäßen Anordnung oben bereits beschrieben wurden. Die oben bereits in Verbindung mit der Vorrichtung bzw. der Anordnung beschriebenen Vorteile stellen sich auch beim erfindungsgemäßen Verfahren ein.

Insbesondere kann vorgesehen sein, dass das erfindungsgemäße Verfahren unter Verwendung einer erfindungsgemäßen Vorrichtung durchgeführt wird. Der oben genannte Verfahrensschritt c) kann insbesondere durch eine Bewegung der erfindungsgemäßen Vorrichtung in Längsrichtung ausgeführt werden, sodass die nach unten weisende Kraft auf den Längsabschnitt der Laufschienen durch die Vorrichtung ausgeübt wird. Gleichzeitig kann der Verfahrensschritt d) ebenfalls während der Bewegung der erfindungsgemäßen Vorrichtung in Längsrichtung ausgeführt werden, indem die inneren Positionierungselemente die Laufschienen während der Bewegung nach außen drücken oder zumindest eine nach innen gerichtete Bewegung der Laufschienen verhindern.

In einer vorteilhaften Ausführungsform werden in Schritt e) im Wesentlichen gleichzeitig zwei in Querrichtung gegenüberliegende Befestigungslaschen mit der Laufschiene verbunden. Bei gleichzeitiger Herstellung der Verbindung mit gegenüberliegenden Befestigungslaschen kommt es zu einer symmetrischen Kraftausübung, wodurch die Maßgenauigkeit verbessert wird.

In einer vorteilhaften Ausführungsform werden die Schritte c) bis e) nach Herstellung der Verbindung in einem ersten Längsabschnitt der Laufschienen in einem benachbarten zweiten Längsabschnitt wiederholt, um eine in Längsrichtung von der bereits mit der Laufschiene verbundenen Befestigungslasche beabstandete Befestigungslasche mit der Laufschiene zu verbinden. Dazu kann insbesondere die erfindungsgemäße Vorrichtung in Längsrichtung bewegt werden.

Nachfolgend wird eine bevorzugte Ausführungsform der Erfindung unter Bezugnahme auf die beigefügten Zeichnungen beispielhaft erläutert. Es zeigen
- Figur 1:: eine dreidimensionale Seitenansicht einer Ebene eines erfindungsgemäßen Hochregallagers sowie zwei erfindungsgemäße Vorrichtungen, die in Lagerkanälen des Hochregallagers positioniert sind;
- Figur 2:: eine dreidimensionale Seitenansicht einer erfindungsgemäßen Vorrichtung zur Fixierung von Laufschienen an Befestigungslaschen;
- Figur 3:: eine Frontansicht auf die erfindungsgemäße Vorrichtung der Figur 2;
- Figur 4:: den in Figur 3 illustrierten Ausschnitt B in einer vergrößerten Darstellung;
- Figur 5:: eine Querschnittsansicht einer Laufschiene;
- Figur 6:: den in Figur 1 illustrierten Ausschnitt A in einer vergrößerten Darstellung;
- Figur 7:: eine dreidimensionale Ansicht einer erfindungsgemäßen Vorrichtung, die auf eine Transfereinrichtung aufgesetzt ist.

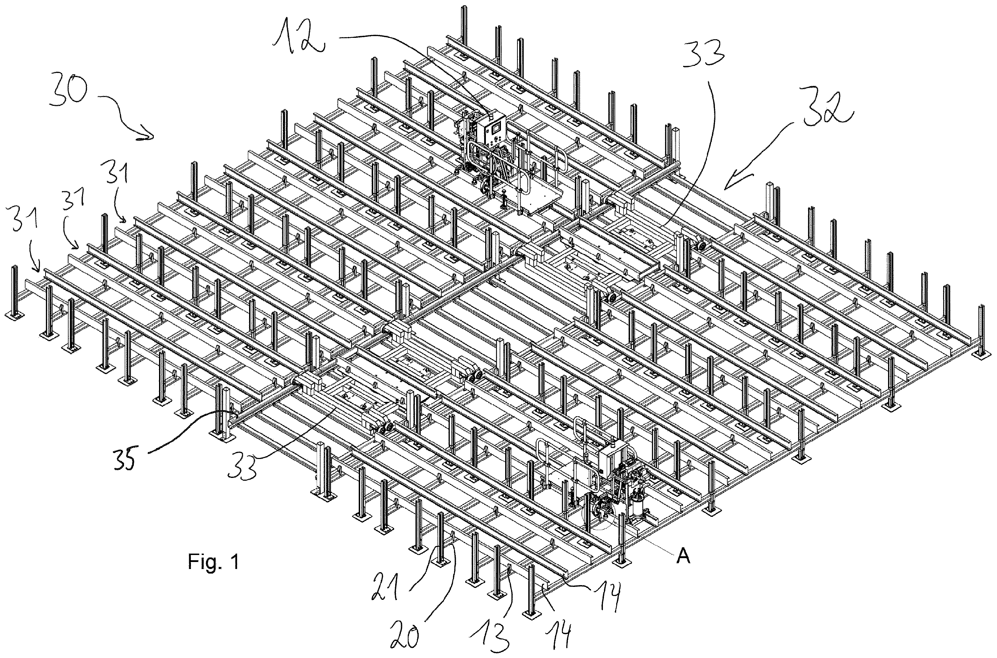

Figur 1 zeigt eine dreidimensionale Seitenansicht einer Ebene eines erfindungsgemäßen Hochregallagers 30. Das Hochregallager 30 weist weitere im Wesentlichen identisch aufgebaute Ebenen auf, die unter und über der gezeigten Ebene angeordnet sind. Innerhalb einer Ebene ist eine Mehrzahl von Lagerkanälen 31 sowie einen Transportgang 32 vorhanden. Die Lagerkanäle 31 münden jeweils in den Transportgang 32. Das Hochregallager umfasst zudem eine Stützstruktur, die vertikale Träger 21 und damit verbundene Traversen 20 umfasst. Von den Traversen 20 ragen nach oben weisende Befestigungslaschen 13 ab.

In jedem Lagerkanal 31 befinden sich zwei Laufschienen 14, die teilweise bereits an den Befestigungslaschen 13 befestigt sind und teilweise lediglich entlang der Befestigungslaschen 13 vorausgerichtet sind. In Figur 1 sind zudem zwei erfindungsgemäße Vorrichtungen 12 zur Fixierung der Laufschienen 14 an den Befestigungslaschen 13 illustriert, die sich jeweils in einem der Lagerkanäle 31 befinden. Die Vorrichtungen 12 weisen Laufrollen auf, mit denen sie auf den Laufschienen abrollen. Die Vorrichtungen 12 sind auf diese Weise innerhalb der Lagerkanäle bewegbar. Innerhalb des Transportgangs 32 sind zudem zwei Transfereinrichtungen 33 illustriert. Eine Vorrichtung 12 kann ausgehend von einem Lagerkanal 31 auf eine Transfereinrichtung 33 aufgefahren werden. Anschließend kann die Transfereinrichtung 33 entlang des Transportgangs 32 bewegt werden, um die Vorrichtung 12 zu einem anderen Lagerkanal 31 zu bringen. Die Transfereinrichtung 33 weist eine Dreheinheit auf, die eine Drehung der Vorrichtung 12 um 180° ermöglicht. Die Vorrichtung 12 kann auf diese Weise mit ihrem vorderen Ende nach vorne weisend in auf beiden Seiten des Transportgangs 32 befindliche Lagerkanäle 31 einfahren. Auch wenn vorliegend zwei Vorrichtungen 12 und zwei Transfereinrichtungen 33 illustriert sind, sind vor diesem Hintergrund eine einzelne Vorrichtung 12 und eine einzelne Transfereinrichtung 33 ausreichend, um Laufschienen in sämtlichen Lagerkanälen der Regallagerebene zu fixieren. Am Ende eines Transportgangs 32 kann zudem ein Aufzug vorhanden sein (in Figur 1 nicht gezeigt), mit dessen Hilfe die Vorrichtung 12 zu einer anderen Ebene des Hochlager Regals 30 gebracht werden kann. Entsprechend kann mit Hilfe einer einzigen Vorrichtung 12 grundsätzlich das gesamte Hochregallager bedient werden.

Die Vorrichtung 12 kann in einen Lagerkanal 31 bereits dann eingefahren werden, wenn auf die Traversen 20 zwei Laufschienen 14 aufgelegt und vorausgerichtet sind, ohne dass die Laufschienen 14 mit den Befestigungslaschen verbunden sind. Eine Laufschiene 14 ist vorausgerichtet, wenn die Außenseiten der Laufschiene 14 in etwa parallel zu einer Gruppe von Befestigungslaschen 13 ausgerichtet ist, wobei lediglich ein geringer Abstand oder ggf. sogar bereits ein Kontakt zwischen der Außenseite und den Befestigungslaschen 13 besteht. Mit Hilfe der erfindungsgemäßen Vorrichtung 12 werden die Laufschienen 14 beim Auffahren auf die Laufschienen 14 vollständig ausgerichtet und anschließend mit den Befestigungslaschen 13 verbunden.

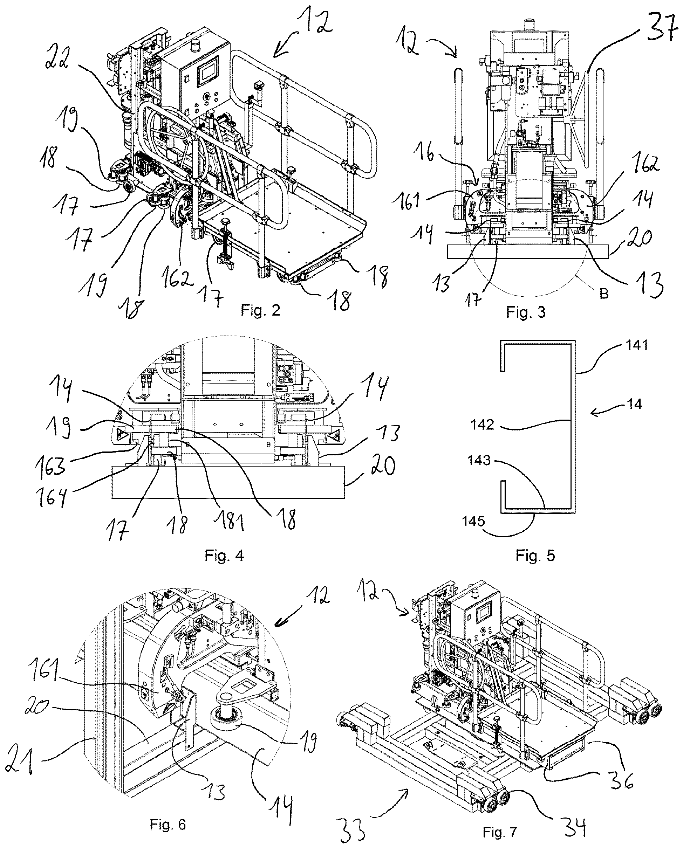

Figur 2 zeigt eine dreidimensionale Seitenansicht einer erfindungsgemäßen Vorrichtung 12 zur Fixierung eines Paars von Laufschienen 14 an zwei Gruppen von Befestigungslaschen 13. Die Vorrichtung 12 umfasst eine Rahmenstruktur 22, die mit Laufrollen 17 zum Abrollen auf den Laufschienen 14 verbunden ist. Eine in Querrichtung betrachtete Entfernung zwischen den Befestigungslaschen 13 ist an eine Spurbreite der Vorrichtung 12 angepasst. Beim Einfahren in einen Lagerkanal 31 rollen die jeweiligen Laufrollen 17 auf einer Lauffläche der ersten Laufschiene 14 und auf einer Lauffläche der zweiten Laufschiene 14 ab. Zumindest einige der Laufrollen 17 sind durch eine Antriebseinrichtung drehbar angetrieben. Die Antriebseinrichtung weist vorliegend ein von einer Bedienperson betätigbares Handrad 37 (siehe Figur 3) zur Übertragung eines Drehmoments auf die Laufrollen 17 auf.

Die Vorrichtung umfasst zudem für jede der Laufschienen 14 innere Führungsrollen 18, die beim Auffahren der Vorrichtung 12 auf die vorausgerichteten Laufschienen 14 mit Innenflächen der jeweiligen Laufschienen 14 in Kontakt treten. Die beiden vorausgerichteten Laufschienen 14 werden dabei nach außen gedrückt und dadurch ausgerichtet oder zumindest von den inneren Führungsrollen 18 an einer nach innen gerichteten Bewegung gehindert. Die inneren Führungsrollen 18 können als innere Positionierungselemente angesehen werden.

Die Vorrichtung umfasst zudem eine Mehrzahl von äußeren Führungsrollen 19. Jede äußere Führungsrolle 19 liegt in Querrichtung betrachtet einer inneren Führungsrolle 18 derart gegenüber, dass ein in Querrichtung betrachtete lichter Abstand einer Dicke der Laufschiene 14 entspricht. Die äußeren Führungsrollen 19 können als äußere Positionierungselemente angesehen werden. Beim Auffahren der Vorrichtung 12 auf die vorausgerichteten Laufschienen 14 kommen die äußeren Führungsrollen 19 an einer Außenfläche der jeweiligen Laufschiene 14 zur Anlage, so dass eine nach außen gerichtete Bewegung der jeweiligen Laufschiene 14 von den äußeren Führungsrolle 19 verhindert wird.

Figur 3 zeigt eine Frontansicht auf eine erfindungsgemäße Vorrichtung 12. Figur 4 zeigt den in Figur 3 illustrierten Ausschnitt B in einer vergrößerten Darstellung. Die Vorrichtung 12 befindet sich auf zwei Laufschienen 14, die auf einer Mehrzahl von Traversen 20 aufliegen. Von den Traversen ist in den Figuren 3 und 4 lediglich eine sichtbar ist. An der Traverse 20 sind zwei nach oben abragende Befestigungslaschen 13 fixiert. Ein in Querrichtung (also entlang der Traverse 20) gemessener lichter Abstand zwischen den Befestigungslaschen 13 ist an die Spurbreite der Vorrichtung 12 angepasst.

Die Vorrichtung 12 umfasst eine Verbindungseinheit 16, die zur Herstellung von Clinchverbindungen ausgebildet ist. Für jede der Laufschienen 14 weist die Verbindungseinheit 16 einen Verbindungsarm 161, 162 auf, der dazu ausgebildet sind, die Befestigungslaschen 13 von außen zu umgreifen. An jedem Verbindungsarm 161, 162 ist ein Stempel 163 angeordnet (siehe Figur 4). Zudem umfasst die Verbindungseinheit 16 auf beiden Seiten jeweils eine Matrize 164, die in der Nähe einer Innenfläche 142 der jeweiligen Laufschiene 14 positioniert ist. Bei Herstellung einer Clinchverbindung werden der jeweilige Stempel 163 und die jeweilige Matrize 164 aufeinander zu und gegeneinander gepresst, um das Material von Befestigungslasche 13 und Laufschiene 14 plastisch zu verformen und die Verbindungspartner dadurch auf grundsätzlich bekannte Weise aneinander zu fügen. Sofern zwischen einer Laufschiene 14 und einer Befestigungslasche 13 kurz vor Herstellung der Clinchverbindung noch ein geringer Abstand besteht, werden die beiden Verbindungspartner 13, 14 durch die sich aufeinander zu bewegenden Elemente 163, 164 aneinandergepresst und exakt ausgerichtet. Stempel 163 und Matrize 164 sind vorzugsweise über eine Hydrauliksteuerung gesteuert, die während der vorstehend genannten Bewegung der Elemente einen auf diese wirkenden Gegendruck erfasst und bei Überschreiten eines Druckschwellwerts (welcher das Aufeinandertreffen von Laufschiene und Befestigungslasche signalisiert) den Clinchvorgang auslöst.

Die Laufschienen 14 sind jeweils als C-Profil ausgebildet und so ausgerichtet, dass die offenen Seiten der C-Profile nach innen weisen. Die C-Profile umfassen jeweils eine Außenfläche 141, einen Innenfläche 142, eine innere Bodenfläche 143 sowie eine äußere Bodenfläche 145 (siehe Figur 5). Die innere Bodenfläche 143 bildet die Lauffläche der Laufschiene 14, auf der die Laufrollen 17 abrollen. Mit der äußeren Bodenfläche 145 liegt die Laufschiene 14 auf den Traversen 20 auf.

In der vergrößerten Ansicht der Figur 4 ist erkennbar, dass zwei innere Führungsrollen 18 der Vorrichtung 12 auf unterschiedlichen Höhen positioniert sind und durch einen vertikalen Schaft 181 miteinander verbunden sind. Die miteinander verbundenen inneren Führungsrollen 18 greifen auf diese Weise an unterschiedlichen Höhen an der Laufschiene an und vermeiden dadurch ein Verkippen der Laufschiene 14.

Die äußeren Führungsrollen 19 sind oberhalb einer durch die Clinchverbindungen definierten Verbindungsebene positioniert, so dass die äußeren Führungsrollen 19 oberhalb der Befestigungslaschen 13 an der Laufschiene 14 abrollen können.

Figur 6 zeigt den in Figur 1 illustrierten Ausschnitt A in einer vergrößerten Ansicht. In dieser Ansicht ist der vertikale Träger 21 und die damit verbundene Traverse 20 gezeigt, an der eine Befestigungslasche 13 fixiert ist. Auf die Traverse 20 ist eine Laufschiene 14 aufgelegt und derart vorausgerichtet, dass eine Außenfläche der Laufschiene 14 an der Befestigungslasche 13 anliegt. Die Vorrichtung 12, befindet sich in einer Position, in der ein Verbindungsarm 161 der Verbindungseinheit 16 in Längsrichtung der Laufschiene 14 auf Höhe der Befestigungslasche 13 positioniert ist. Der Stempel des Verbindungsarms 161 kann ausgehend von dieser Position gegen die Befestigungslasche 13, die Außenfläche 142 der Laufschiene 14 sowie gegen die dahin befindliche Matrize (in Figur 6 nicht zu sehen) gedrückt werden, um eine Clinchverbindung zwischen der Befestigungslasche 13 und der Laufschiene 14 herzustellen.

Figur 7 zeigt eine dreidimensionale Ansicht einer erfindungsgemäßen Vorrichtung 12, die auf eine Transfereinrichtung 33 aufgesetzt ist. Die Transfereinrichtung 33 umfasst eine Mehrzahl von Laufrollen 34, die dazu eingerichtet sind auf zwei parallel zueinander verlaufenden Laufschienen 35 des Transportgangs 32 abzurollen (siehe auch Figur 1). Die Transfereinrichtung 33 ist dadurch entlang des Transportgangs 32 bewegbar. Die Transfereinrichtung 33 umfasst zudem zwei Laufschienen 36, deren Querschnitt im Wesentlichen identisch zu den Laufschienen 14 ausgestaltet ist. Die Vorrichtung ist auf den Laufschienen 36 abgestellt. Die Laufschienen 36 sind derart ausgerichtet, dass durch eine entsprechende Bewegung der Transfereinrichtung 33 entlang des Transportgangs 32 ein Übergang von den Laufschienen 36 zu einem innerhalb eines Lagerkanals 31 befindlichen Paares von Laufschienen 14 hergestellt werden kann, der es der Vorrichtung 12 ermöglicht, von der Transfereinrichtung 33 auf die im Lagerkanal 31 befindlichen Laufschienen 14 aufzufahren. Die Transfereinrichtung 33 umfasst vorzugsweise einen Antrieb, der eine automatische Bewegung der Transfereinrichtung 33 entlang des Transportgangs 32 ermöglicht. Möglich ist auch, dass die Transfereinrichtung 33 manuell innerhalb des Transportgangs bewegbar ist. Die Dreheinheit zur Drehung der Vorrichtung 12 um 180° kann ebenfalls automatisch oder manuell angetrieben sein.

## Patentansprüche

1. Vorrichtung (12) zur Fixierung zweier Laufschienen (14) für einen Transportwagen an einer Mehrzahl von Befestigungslaschen (13), die von einer Stützstruktur (20, 21) nach oben abragen, in vorgesehener Längsrichtung der Laufschienen (14) voneinander beabstandet und derart angeordnet sind, dass eine Außenseite der ersten Laufschiene (14) gleichzeitig an eine erste Gruppe der Mehrzahl von Befestigungslaschen (13) anlegbar ist und eine Außenseite der zweiten Laufschiene (14) gleichzeitig an eine zweite Gruppe der Mehrzahl von Befestigungslaschen (13) anlegbar ist, wobei ein Abstand in Querrichtung zwischen einer Befestigungslasche (13) der ersten Gruppe und einer Befestigungslasche (13) der zweiten Gruppe an eine vorgesehene Spurbreite der Laufschienen (14) angepasst ist, **dadurch gekennzeichnet, dass** die Vorrichtung aufweist:
- zumindest eine Laufrolle (17) zum Abrollen der Vorrichtung auf einer Lauffläche (143) der in vorgesehener Längsrichtung vorausgerichteten Laufschienen (14),
- eine Positionierungseinheit mit zumindest einem ersten inneren Positionierungselement (18) zur Anlage an einer Innenfläche (142) der ersten Laufschiene (14) und mit einem zweiten inneren Positionierungselement (18) zur Anlage an einer Innenfläche (142) der zweiten Laufschiene (14),
- eine Verbindungseinheit (16), die dazu ausgebildet ist, eine Verbindung zwischen den Befestigungslaschen (13) und den jeweiligen Laufschienen (14) herzustellen, wenn die Vorrichtung auf die beiden vorausgerichteten Laufschienen (14) aufgesetzt ist.

2. Vorrichtung (12) gemäß Anspruch 1, weiterhin umfassend eine Antriebseinrichtung zur Bewegung der Vorrichtung (12) entlang der in vorgesehener Längsrichtung vorausgerichteten Laufschienen (14), wobei die Antriebseinrichtung vorzugsweise zur Übertragung eines Drehmoments auf die Laufrolle (17) ausgebildet ist.

3. Vorrichtung (12) gemäß Anspruch 1 oder 2, weiterhin umfassend eine Sensoreinheit zur Erkennung, ob eine Längsposition der Verbindungseinheit (16) mit einer Längsposition einer Befestigungslasche (13) übereinstimmt, wobei die Antriebseinrichtung und/oder die Verbindungseinheit vorzugsweise auf Basis eines Signals der Sensoreinheit steuerbar sind.

4. Vorrichtung (12) gemäß einem der Ansprüche 1 bis 3, bei der die Positionierungseinheit weiterhin ein äußeres Positionierungselement (19) zur Anlage an einer Außenfläche (141) der Laufschiene (14) umfasst, wobei das äußere Positionierungselement (19) vorzugsweise einem der inneren Positionierungselemente (18) in Querrichtung gegenüberliegt.

5. Vorrichtung (12) gemäß Anspruch 4, bei der von der Verbindungseinheit (16) herstellbare Befestigungspunkte innerhalb einer Ebene liegen, wobei das äußere Positionierungselement (19) oberhalb der Befestigungsebene an der ersten oder zweiten Laufscheine (14) anliegt.

6. Vorrichtung (12) gemäß einem der Ansprüche 1 bis 5, weiterhin umfassend einen vorzugsweise elektrischen und/oder pneumatischen Energiespeicher zum Betrieb der Antriebseinrichtung und/oder der Verbindungseinheit.

7. Vorrichtung (12) gemäß einem der Ansprüche 1 bis 6, bei der zumindest eines der äußeren und/oder inneren Positionierungselemente (18, 19) durch eine Führungsrolle gebildet ist, die zum Abrollen an einer Innenfläche (142) oder Außenfläche (141) der Laufschiene (14) ausgebildet ist.

8. Vorrichtung (12) gemäß einem der Ansprüche 1 bis 7, bei der die Verbindungseinheit (16) ein äußeres Verbindungswerkzeug (163) aufweist, das dazu ausgestaltet ist, zur Herstellung der Verbindung von außen auf eine Befestigungslasche (13) einzuwirken, wobei die Verbindungseinheit (16) vorzugsweise zur Herstellung einer Fügeverbindung zwischen der Befestigungslasche (13) und der Laufschiene (14) ausgebildet ist, wobei die Fügeverbindung weiter vorzugsweise eine Durchsetzfügeverbindung ist.

9. Anordnung umfassend:
- ein Hochregallager (30) mit einer Stützstruktur (20, 21) und zumindest einem Lagerkanal (31),
- zwei innerhalb des Lagerkanals (31) zu befestigende Laufschienen (14) und
- eine Vorrichtung (12) gemäß einem der Ansprüche 1 bis 8,
wobei die Stützstruktur (20, 21) eine Mehrzahl von in Längsrichtung des Lagerkanals (31) beabstandete Traversen (20) aufweist, an denen die Mehrzahl von nach oben abragenden Befestigungslaschen (13) so positioniert ist, dass eine Außenseite (141) einer ersten der Laufschienen (14) gleichzeitig an eine erste Gruppe der Mehrzahl von Befestigungslaschen (13) anlegbar ist und eine Außenseite (141) einer zweiten der Laufschienen (14) gleichzeitig an eine zweite Gruppe der Mehrzahl von Befestigungslaschen (13) anlegbar ist, wobei ein Abstand in Querrichtung zwischen einer Befestigungslasche (13) der ersten Gruppe und einer Befestigungslasche (13) der zweiten Gruppe mit einer vorgesehenen Spurbreite der Laufschienen (14) korrespondiert und wobei eine in Querrichtung betrachtete Entfernung zwischen den äußeren Enden der ersten und zweiten inneren Positionierungselemente (18) an die vorgesehene Spurbreite derart angepasst ist, dass die Außenflächen der Laufschienen (14) bei einer Bewegung der Vorrichtung entlang der vorgesehenen Längsrichtung der Laufschienen (14) gegen jeweilige Befestigungslaschen (13) gedrückt oder die Laufschienen (14) zumindest an einer in Querrichtung nach innen weisenden Bewegung gehindert werden.

10. Anordnung gemäß Anspruch 9, bei der die Laufschienen (14) durch C-Profile gebildet sind, deren offene Seiten bei vorgesehener Ausrichtung nach Innen weisen.

11. Anordnung gemäß Anspruch 10, bei der die Lauffläche (143) der Laufschiene (14) durch eine innere Bodenfläche des C-Profils gebildet ist.

12. Anordnung gemäß einem der Ansprüche 9 bis 11, bei der das Hochregallager (30) zumindest zwei Lagerkanäle (31) und zumindest einen Transportgang (32) aufweist, in den die Lagerkanäle (31) einmünden, wobei die Anordnung (12) weiterhin eine Transfereinrichtung (33) aufweist, die zur Aufnahme der Vorrichtung (12) ausgebildet und entlang des Transportgangs (32) derart bewegbar ist, dass die Vorrichtung (12) ausgehend von einem ersten der Lagerkanäle (31) auf die Transfereinrichtung (33) auffahrbar und nach anschließender Bewegung der Transfereinrichtung (33) in einen anderen der Lagerkanäle (31) einfahrbar ist.

13. Verfahren zur Fixierung zweier Laufschienen (14) für einen Transportwagen an einer Mehrzahl von Befestigungslaschen (13), die von einer Stützstruktur (20) nach oben abragen, in vorgesehener Längsrichtung der Laufschienen (14) voneinander beabstandet und derart angeordnet sind, dass eine Außenseite (141) der ersten Laufschiene (14) gleichzeitig an eine erste Gruppe der Mehrzahl von Befestigungslaschen (13) anlegbar ist und eine Außenseite (141) der zweiten Laufschiene (14) gleichzeitig an eine zweite Gruppe der Mehrzahl von Befestigungslaschen (13) anlegbar ist, wobei ein Abstand in Querrichtung zwischen einer Befestigungslasche (13) der ersten Gruppe und einer Befestigungslasche (13) der zweiten Gruppe an eine vorgesehene Spurbreite der Laufschienen (14) angepasst ist, umfassend die nachfolgenden Schritte:
a) Auflegen einer ersten der Laufschienen (14) auf die Stützstruktur (20) derart, dass eine Außenseite (141) der Laufschiene (14) entlang der ersten Gruppe der Befestigungslaschen (13) vorausgerichtet ist;
b) Auflegen einer zweiten der Laufschienen (14) auf die Stützstruktur (20) derart, dass eine Außenseite (141) der Laufschiene (14) entlang der zweiten Gruppe der Befestigungslaschen (13) vorausgerichtet ist;
c) Ausüben einer nach unten weisen Kraft auf einen Längsabschnitt der gemäß den Schritten a) und b) vorausgerichteten Laufschienen (14) derart, dass der Längsabschnitt der jeweiligen Laufschiene (14) auf die Stützstruktur (20) gedrückt wird;
d) Einbringen einer Positionierungseinheit mit einem ersten inneren Positionierungselement (18) und einem zweiten inneren Positionierungselement (18) in einen im Längsabschnitt befindlichen Zwischenraum zwischen den Laufschienen (14) derart, dass das erste innere Positionierungselement (18) an einer Innenfläche (142) der ersten Laufschiene (14) und das zweite innere Positionierungselement (18) an einer Innenfläche (142) der zweiten Laufschiene (14) zum Liegen kommt und die vorausgerichteten Laufschienen (14) dabei gegen die jeweiligen Befestigungslaschen (13) nach außen gedrückt oder die Laufschienen (14) zumindest an einer in Querrichtung nach innen weisenden Bewegung gehindert werden;
e) Herstellen einer Verbindung zwischen einer im Längsabschnitt befindlichen Befestigungslasche (13) und einer Außenseite (141) einer Laufschiene (14), wobei die Befestigungslaschen (13) zur Herstellung der Verbindung von außen umgriffen werden.

14. Verfahren gemäß Anspruch 13, bei dem in Schritt e. im Wesentlichen gleichzeitig zwei in Querrichtung gegenüberliegende Befestigungslaschen (13) mit der Laufschiene verbunden werden.

15. Verfahren gemäß Anspruch 13 oder 14, bei dem die Schritte c. bis e. in einem an den Längsabschnitt in vorgesehener Längsrichtung der Laufschienen (14) benachbarten Längsabschnitt wiederholt werden, um eine in Längsrichtung von der bereits mit der Laufschiene verbundenen Befestigungslasche (13) beabstandete Befestigungslasche (13) mit der Laufschiene (14) zu verbinden.

## Claims

1. Apparatus (12) for fixing two running rails (14) for a transport vehicle to a plurality of fastening brackets (13), said fastening brackets projecting upwards from a supporting structure (20, 21) and being spaced apart from one another in the intended longitudinal direction of the running rails (14) and being arranged in such a way that an outer side of the first running rail (14) is able to be made to abut against a first group of the plurality of fastening brackets (13) simultaneously and an outer side of the second running rail (14) is able to be made to abut against a second group of the plurality of fastening brackets (13) simultaneously, wherein a spacing between a fastening bracket (13) of the first group and a fastening bracket (13) of the second group in a transverse direction is adapted to an intended track width of the running rails (14), **characterized in that** the apparatus has:
- at least one running roller (17) for rolling of the apparatus on a running surface (143) of the running rails (14) which have been pre-aligned in the intended longitudinal direction,
- a positioning unit having at least one first inner positioning element (18) for abutment against an inner surface (142) of the first running rail (14) and having a second inner positioning element (18) for abutment against an inner surface (142) of the second running rail (14),
- a connecting unit (16) which is configured to produce a connection between the fastening brackets (13) and the respective running rails (14) when the apparatus has been mounted onto the two pre-aligned running rails (14).

2. Apparatus (12) according to Claim 1, further comprising a drive device for moving the apparatus (12) along the running rails (14) pre-aligned in the intended longitudinal direction, wherein the drive device is preferably configured to transmit a torque to the running roller (17).

3. Apparatus (12) according to Claim 1 or 2, further comprising a sensor unit for detecting whether a longitudinal position of the connecting unit (16) corresponds to a longitudinal position of a fastening bracket (13), wherein the drive device and/or the connecting unit are preferably controllable on the basis of a signal of the sensor unit.

4. Apparatus (12) according to one of Claims 1 to 3, in which the positioning unit further comprises an outer positioning element (19) for abutment against an outer surface (141) of the running rail (14), wherein the outer positioning element (19) is preferably situated opposite one of the inner positioning elements (18) in the transverse direction.

5. Apparatus (12) according to Claim 4, in which fastening points able to be produced by the connecting unit (16) lie within a plane, wherein the outer positioning element (19) abuts against the first or second running rail (14) above the fastening plane.

6. Apparatus (12) according to one of Claims 1 to 5, further comprising a preferably electrical and/or pneumatic energy store for operating the drive device and/or the connecting unit.

7. Apparatus (12) according to one of Claims 1 to 6, in which at least one of the outer and/or inner positioning elements (18, 19) is formed by a guide roller which is configured to roll on an inner surface (142) or outer surface (141) of the running rail (14).

8. Apparatus (12) according to one of Claims 1 to 7, in which the connecting unit (16) has an outer connecting tool (163) which is configured to act on a fastening bracket (13) from the outside for the purpose of producing the connection, wherein the connecting unit (16) is preferably configured to produce a joining connection between the fastening bracket (13) and the running rail (14), wherein the joining connection is furthermore preferably a clinching connection.

9. Arrangement comprising:
- a high-bay warehouse (30) having a supporting structure (20, 21) and having at least one storage channel (31),
- two running rails (14) to be fastened within the storage channel (31), and
- an apparatus (12) according to one of Claims 1 to 8, wherein the supporting structure (20, 21) comprises a plurality of crossmembers (20) which are spaced apart in the longitudinal direction of the storage channel (31) and on which the plurality of upwardly projecting fastening brackets (13) is positioned in such a way that an outer side (141) of a first one of the running rails (14) is able to be made to abut against a first group of the plurality of fastening brackets (13) simultaneously and an outer side (141) of a second one of the running rails (14) is able to be made to abut against a second group of the plurality of fastening brackets (13) simultaneously, wherein a spacing between a fastening bracket (13) of the first group and a fastening bracket (13) of the second group in a transverse direction corresponds to an intended track width of the running rails (14), and wherein a distance, as seen in the transverse direction, between the outer ends of the first and second inner positioning elements (18) is adapted to the intended track width in such a way that, during a movement of the apparatus along the intended longitudinal direction of the running rails (14), the outer surfaces of the running rails (14) are pressed against respective fastening brackets (13) or the running rails (14) are at least prevented from carrying out a movement directed inwards in the transverse direction.

10. Arrangement according to Claim 9, in which the running rails (14) are formed by C profiles, the open sides of which are directed inwards when the orientation is as intended.

11. Arrangement according to Claim 10, in which the running surface (143) of the running rail (14) is formed by an inner base surface of the C profile.

12. Arrangement according to one of Claims 9 to 11, in which the high-bay warehouse (30) has at least two storage channels (31) and at least one transport passage (32) into which the storage channels (31) open out, wherein the arrangement (12) further has a transfer device (33) which is configured for receiving the apparatus (12) and which is movable along the transport passage (32) in such a way that the apparatus (12) is able to be moved from a first one of the storage channels (31) onto the transfer device (33) and, after subsequent movement of the transfer device (33), is able to be moved into another one of the storage channels (31).

13. Method for fixing two running rails (14) for a transport vehicle to a plurality of fastening brackets (13), said fastening brackets projecting upwards from a supporting structure (20) and being spaced apart from one another in the intended longitudinal direction of the running rails (14) and being arranged in such a way that an outer side (141) of the first running rail (14) is able to be made to abut against a first group of the plurality of fastening brackets (13) simultaneously and an outer side (141) of the second running rail (14) is able to be made to abut against a second group of the plurality of fastening brackets (13) simultaneously, wherein a spacing between a fastening bracket (13) of the first group and a fastening bracket (13) of the second group in a transverse direction is adapted to an intended track width of the running rails (14), comprising the following steps:
a) placing a first one of the running rails (14) onto the supporting structure (20) in such a way that an outer side (141) of the running rail (14) is pre-aligned along the first group of fastening brackets (13);
b) placing a second one of the running rails (14) onto the supporting structure (20) in such a way that an outer side (141) of the running rail (14) is pre-aligned along the second group of fastening brackets (13);
c) exerting a downward force on a longitudinal section of the running rails (14) that have been pre-aligned according to steps a) and b), in such a way that the longitudinal section of the respective running rail (14) is pressed onto the supporting structure (20);
d) introducing a positioning unit, having a first inner positioning element (18) and a second inner positioning element (18), into an intermediate space, situated in the longitudinal section, between the running rails (14) in such a way that the first inner positioning element (18) comes to abut against an inner surface (142) of the first running rail (14) and the second inner positioning element (18) comes to abut against an inner surface (142) of the second running rail (14) and the pre-aligned running rails (14) are in the process pressed outwards against the respective fastening brackets (13) or the running rails (14) are at least prevented from carrying out a movement directed inwards in the transverse direction;
e) producing a connection between a fastening bracket (13) situated in the longitudinal section and an outer side (141) of a running rail (14), wherein the fastening brackets (13) are engaged around from the outside for the purpose of producing the connection.

14. Method according to Claim 13, in which, in step e., two fastening brackets (13) situated opposite one another in the transverse direction are connected to the running rail substantially simultaneously.

15. Method according to Claim 13 or 14, in which steps c. to e. are repeated in a longitudinal section which is adjacent to the original longitudinal section in the intended longitudinal direction of the running rails (14), in order to connect to the running rail (14) a fastening bracket (13) that is spaced apart in the longitudinal direction from the fastening bracket (13) already connected to the running rail.

## Revendications

1. Dispositif (12) pour la fixation de deux rails de roulement (14) pour un chariot de transport sur une pluralité de pattes de fixation (13) qui dépassent d'une structure de support (20, 21) vers le haut, sont espacées l'une de l'autre dans la direction longitudinale prévue des rails de roulement (14) et sont agencées de telle sorte, qu'un côté extérieur du premier rail de roulement (14) est apte à être appliqué simultanément contre un premier groupe de la pluralité de pattes de fixation (13) et qu'un côté extérieur du deuxième rail de roulement (14) est apte à être appliqué simultanément contre un deuxième groupe de la pluralité de pattes de fixation (13), une distance dans la direction transversale entre une patte de fixation (13) du premier groupe et une patte de fixation (13) du deuxième groupe étant adaptée à une largeur de voie prévue des rails de roulement (14), **caractérisé en ce que** le dispositif comprend :
- au moins un galet de roulement (17) pour faire rouler le dispositif sur une surface de roulement (143) des rails de roulement (14) alignée dans la direction longitudinale prévue,
- une unité de positionnement comprenant au moins un premier élément de positionnement intérieur (18) destiné à venir en contact avec une surface intérieure (142) du premier rail de roulement (14) et un deuxième élément de positionnement intérieur (18) destiné à venir en contact avec une surface intérieure (142) du deuxième rail de roulement (14),
- une unité de connexion (16) adaptée pour établir une connexion entre les pattes de fixation (13) et les rails de roulement (14) respectifs lorsque le dispositif est placé sur les deux rails de roulement pré-alignés (14).

2. Dispositif (12) selon la revendication 1, comprenant en outre un dispositif d'entraînement pour déplacer le dispositif (12) le long des rails de roulement (14) alignés dans la direction longitudinale prévue, le dispositif d'entraînement étant de préférence conçu pour transmettre un couple de rotation au galet de roulement (17).

3. Dispositif (12) selon la revendication 1 ou la revendication 2, comprenant en outre une unité de détection pour détecter si une position longitudinale de l'unité de liaison (16) correspond à une position longitudinale d'une patte de fixation (13), le dispositif d'entraînement et/ou l'unité de liaison étant aptes à être de préférence commandés en fonction d'un signal de l'unité de détection.

4. Dispositif (12) selon l'une des revendications 1 à 3, dans lequel l'unité de positionnement comprend en outre un élément de positionnement extérieur (19) destiné à venir en appui sur une surface extérieure (141) du rail de roulement (14), l'élément de positionnement extérieur (19) étant de préférence en regard de l'un des éléments de positionnement intérieurs (18) dans la direction transversale.

5. Dispositif (12) selon la revendication 4, dans lequel des points de fixation réalisables par l'unité de liaison (16) sont situés à l'intérieur d'un plan, l'élément de positionnement extérieur (19) étant en appui sur le premier ou le deuxième chemin de roulement (14) au-dessus du plan de fixation.

6. Dispositif (12) selon l'une des revendications 1 à 5, comprenant en outre un accumulateur d'énergie, de préférence électrique et/ou pneumatique, pour le fonctionnement du dispositif d'entraînement et/ou de l'unité de liaison.

7. Dispositif (12) selon l'une des revendications 1 à 6, dans lequel au moins l'un des éléments de positionnement extérieur et/ou intérieur (18, 19) est formé par un galet de guidage configuré pour rouler sur une surface intérieure (142) ou une surface extérieure (141) du rail de roulement (14).

8. Dispositif (12) selon l'une des revendications 1 à 7, dans lequel l'unité de liaison (16) comprend un outil de liaison externe (163) configuré pour agir de l'extérieur sur une patte de fixation (13) pour réaliser la liaison, l'unité de liaison (16) étant de préférence configurée pour réaliser une liaison d'assemblage entre la patte de fixation (13) et le rail de roulement (14), la liaison d'assemblage étant en outre de préférence une liaison d'assemblage par pénétration.

9. Agencement comprenant :
- un magasin à hauts rayonnages (30) doté d'une structure de support (20, 21) et d'au moins un canal de stockage (31),
- deux rails de roulement (14) à fixer à l'intérieur du canal de stockage (31), et
- un dispositif (12) selon l'une des revendications 1 à 8,
la structure de support (20, 21) comprenant une pluralité de traverses (20) espacées dans la direction longitudinale du canal de stockage (31), sur lesquelles la pluralité de pattes de fixation (13) faisant saillie vers le haut est positionnée de telle sorte qu'une face extérieure (141) d'un premier des rails de roulement (14) est apte à être simultanément appliquée contre un premier groupe de la pluralité de pattes de fixation (13) et qu'une face extérieure (141) d'un deuxième des rails de roulement (14) est apte à être simultanément appliquée contre un deuxième groupe de la pluralité de pattes de fixation (13), une distance dans la direction transversale entre une patte de fixation (13) du premier groupe et une patte de fixation (13) du deuxième groupe correspondant à une largeur de voie prévue des rails de roulement (14) et dans lequel une distance, considérée dans la direction transversale, entre les extrémités extérieures des premier et deuxième éléments de positionnement intérieurs (18) est adaptée à la largeur de voie prévue de telle sorte, que les surfaces extérieures des rails de roulement (14) sont pressées contre des pattes de fixation respectives (13) lors d'un déplacement du dispositif le long de la direction longitudinale prévue des rails de roulement (14) ou que les rails de roulement (14) sont au moins empêchés de se déplacer vers l'intérieur dans la direction transversale.

10. Agencement selon la revendication 9, dans lequel les rails de roulement (14) sont formés par des profilés en C dont les côtés ouverts sont orientés vers l'intérieur lorsque l'alignement est prévu.

11. Agencement selon la revendication 10, dans lequel la surface de roulement (143) du rail de roulement (14) est formée par une surface de fond intérieure du profilé en C.

12. Agencement selon l'une des revendications 9 à 11, dans lequel le magasin à hauts rayonnages (30) comprend au moins deux canaux de stockage (31) et au moins un couloir de transport (32) dans lequel débouchent les canaux de stockage (31), l'agencement (12) comprenant en outre un dispositif de transfert (33), qui est conçu pour recevoir le dispositif (12) et qui est apte à être déplacé le long du couloir de transport (32) de telle sorte que le dispositif (12) puisse être amené sur le dispositif de transfert (33) en partant d'un premier des canaux de stockage (31) et puisse être introduit dans un autre des canaux de stockage (31) après un déplacement consécutif du dispositif de transfert (33).

13. Procédé de fixation de deux rails de roulement (14) pour un chariot de transport sur une pluralité de pattes de fixation (13) qui font saillie vers le haut à partir d'une structure de support (20), sont espacées les unes des autres dans la direction longitudinale prévue des rails de roulement (14) et sont agencées de telle sorte qu'un côté extérieur (141) du premier rail de roulement (14) soit apte à être appliqué simultanément contre un premier groupe de la pluralité de pattes de fixation (13) et qu'un côté extérieur (141) du deuxième rail de roulement (14) soit apte à être appliqué simultanément contre un deuxième groupe de la pluralité de pattes de fixation (13), une distance dans la direction transversale entre une patte de fixation (13) du premier groupe et une patte de fixation (13) du deuxième groupe étant adaptée à une largeur de voie prévue des rails de roulement (14), comprenant les étapes suivantes :
a) placer un premier des rails de roulement (14) sur la structure de support (20) de telle sorte qu'un côté extérieur (141) du rail de roulement (14) soit orienté vers l'avant le long du premier groupe de pattes de fixation (13) ;
b) placer un deuxième des rails de roulement (14) sur la structure de support (20) de telle sorte qu'un côté extérieur (141) du rail de roulement (14) soit dirigé vers l'avant le long du deuxième groupe de pattes de fixation (13) ;
c) appliquer une force dirigée vers le bas sur une partie longitudinale des rails de roulement (14) alignés selon les étapes a) et b) de telle sorte que la partie longitudinale du rail de roulement (14) respectif soit pressée sur la structure de support (20) ;
d) introduire une unité de positionnement avec un premier élément de positionnement intérieur (18) et un deuxième élément de positionnement intérieur (18) dans un espace intermédiaire situé dans la section longitudinale entre les rails de roulement (14) de telle sorte que le premier élément de positionnement intérieur (18) vienne se placer sur une surface intérieure (142) du premier rail de roulement (14) et que le deuxième élément de positionnement intérieur (18) vienne se placer sur une surface intérieure (142) du deuxième rail de roulement (14), et les rails de roulement (14) alignés sont alors pressés vers l'extérieur contre les pattes de fixation respectives (13) ou les rails de roulement (14) sont empêchés de se déplacer au moins vers l'intérieur dans la direction transversale ;
e) établir une liaison entre une patte de fixation (13) se trouvant dans la section longitudinale et un côté extérieur (141) d'un rail de roulement (14), les pattes de fixation (13) étant entourées de l'extérieur pour réaliser la liaison.

14. Procédé selon la revendication 13, dans lequel, à l'étape e., deux pattes de fixation (13) opposées dans la direction transversale au rail de roulement sont reliées sensiblement simultanément.

15. Procédé selon la revendication 13 ou la revendication 14, dans lequel les étapes c. à e. sont répétées dans une portion longitudinale voisine de la portion longitudinale dans la direction longitudinale prévue des rails de roulement (14), afin de relier au rail de roulement (14) une patte de fixation (13) espacée dans la direction longitudinale de la patte de fixation (13) déjà reliée au rail de roulement.
